Europäisches Patentamt

European Patent Office

Office européen des brevets

(19)

(11) Veröffentlichungsnummer: **0 301 226 B1**

## (12) EUROPÄISCHE PATENTSCHRIFT

(45) Veröffentlichungstag der Patentschrift: **29.07.92**

(51) Int. Cl.⁵: **B23B 27/00**

(21) Anmeldenummer: **88109738.0**

(22) Anmeldetag: **18.06.88**

(54) **Werkzeug für tiefliegende Innenbearbeitung hohler Werkstücke.**

(30) Priorität: **29.07.87 DE 3725014**

(43) Veröffentlichungstag der Anmeldung:
**01.02.89 Patentblatt 89/05**

(45) Bekanntmachung des Hinweises auf die
Patenterteilung:
**29.07.92 Patentblatt 92/31**

(84) Benannte Vertragsstaaten:
**AT CH DE FR GB IT LI SE**

(56) Entgegenhaltungen:
**EP-A- 0 090 929        CH-A- 75 473
DE-A- 3 233 059        DE-B- 1 190 295
US-A- 3 106 869        US-A- 4 557 644**

(73) Patentinhaber: **H. Wohlenberg KG GmbH & Co.
Wohlenbergstrasse 6 - 8
W-3000 Hannover 1(DE)**

(72) Erfinder: **Strate, Hans
19 Peperfeld
W-3000 Hannover 91(DE)**

(74) Vertreter: **Thömen, Uwe, Dipl.-Ing.
Patentanwalt U. Thömen Zeppelinstrasse 5
W-3000 Hannover 1(DE)**

Rank Xerox (UK) Business Services

# Beschreibung

Die Erfindung betrifft ein Werkzeug für die tiefliegende Innenbearbeitung hohler Werkstücke gemäß dem Oberbegriff des Patentanspruchs 1.

Ein Werkzeug dieser Gattung ist durch die US-A-4 557 644 bekannt.

Die Innenbearbeitung hohler Werkstücke mit Hilfe von Werkzeugen bereitet keine großen Schwierigkeiten, wenn bei der Innenbearbeitung einfache Konturen der inneren Bohrung verlangt werden. Allerdings stellen sich in der Praxis erhebliche Probleme bei der Herstellung schwieriger Konturen ein, wenn keine rotatorische Bearbeitung möglich ist, bei der ein feststehendes Werkzeug verwendet wird, wobei sich das Werkstück dann dreht.

Durch die oben genannte US-A-4 557 644 ist ein Werkzeug für die tiefliegende Innenbearbeitung hohler Werkstücke bekannt, wobei das Werkzeug eine hohl ausgebildete Bohrstange umfaßt, die von einer Klemmvorrichtung gehalten ist Innerhalb der Bohrstange befindet sich eine Antriebswelle, und am vorderen Ende der Bohrstange ist ein Werkzeugkopf mit einem Bearbeitungswerkzeug angeordnet, welches wahlweise über die Antriebswelle antreibbar ist.

Bei diesem bekannten Werkzeug ist die Bohrstange fest mit der Klemmvorrichtung verbunden, so daß keine Möglichkeit besteht, daß die Klemmvorrichtung die Bohrstange zu einer axialen Richtung für eine nummerische Steuerung der Bohrstange freigeben kann. Somit ist die Ausspannlänge, also der ohne weitere Lagerung frei von der Klemmvorrichtung gehaltene Teil der Bohrstange starr und fest vorgegeben. Diese Ausspannlänge läßt sich also nicht ändern, so daß eine Anpassung an unterschiedliche Bearbeitungsoperationen wie Fräsen oder Bohren nicht möglich ist.

Des weiteren ist es bei dem bekannten Werkzeug von Nachteil, daß für die innerhalb der hohlen Bohrstange angeordnete Antriebswelle keine inneren Schwingungsdämpfer vorgesehen sind. Dies hat zur Folge, daß sich die Ausspannlänge der Bohrstange zur Vermeidung von störenden Schwingungen auf eine bestimmte Mindestlänge beschränkt, die nicht überschritten werden darf. Sehr tief liegende Bohrungen lassen sich deshalb mit diesem Werkzeug nicht bearbeiten.

Durch die EP-A-0 090 929 sind zwar an sich Schwingungsdämpfer für Tiefbohrwerkzeuge bekannt. Hierbei handelt es sich jedoch um außenliegende Schwingungsdämpfer, deren Einsatz bei der tiefliegenden Innenbearbeitung hohler Werkstücke nicht möglich ist. Die außenliegenden Schwingungsdämpfer sind nämlich störend, weil sich durch ihren Einsatz der Durchmesser der Bohrstange an denjenigen Stellen vergrößert, an denen sich die Schwingungsdämpfer befinden. Deshalb lassen sich kleinere Bohrungen mit geringem Durchmesser nicht bearbeiten.

Der Erfindung liegt die Aufgabe zugrunde, ein Werkzeug der im Oberbegriff des Anspruchs 1 genannten Art so auszubilden, daß eine sichere tiefliegende Innenbearbeitung hohler Werkstücke mit schwierigen Konturen möglich ist, die mit einer rotatorischen Bearbeitung nicht herstellbar sind. Dabei sollen auch tiefliegende Bohrungen mit kleinem Durchmesser bearbeitet werden können.

Die Lösung dieser Aufgabe erfolgt bei dem im Oberbegriff des Anspruchs 1 genannten Werkzeug durch die Merkmale des kennzeichnenden Teils des Patentanspruchs 1.

Ein Vorteil der Erfindung besteht darin, daß es möglich ist, tief in eine Bohrung des zu bearbeitenden hohlen Werkstückes einzufahren, wobei der am vorderen Ende der Bohrstange vorgesehene Werkzeugkopf mit einem Bearbeitungswerkzeug die Möglichkeit schafft, auch schwierige Konturen mit Hintergreifungen zu erzeugen.

Das tiefe Einfahren in die Bohrung wird dadurch ermöglicht, daß die Bohrstange mit inneren Schwingungsdämpfern versehen ist, wodurch die Bohrstange relativ lang ausgebildet werden kann. Ferner ist die Klemmvorrichtung derart ausgebildet, daß sie die Bohrstange wahlweise festklemmt oder zu einer Bewegung in Achsrichtung freigibt, so daß die Bohrstange nummerisch gesteuert und im nicht festgeklemmten Zustand zu einer Positionierbewegung freigegeben ist.

Dadurch besteht die Möglichkeit, den Werkzeugkopf in eine gewünschte örtliche Lage in Bezug auf das zu bearbeitende Werkstück zu bringen.

Die Klemmvorrichtung selbst ist nummerisch steuerbar, wobei dann die festgeklemmte Bohrstange eine nummerisch gesteuerte Vorschubbewegung durchführt. Dadurch wird die Möglichkeit geschaffen, die festgeklemmte Bohrstange mit dem vorderen Werkzeugkopf einer nummerisch gesteuerten Vorschubbewegung für die gewünschte Bearbeitung zu unterwerfen.

Wenn im übrigen anders als bei einer rotatorischen Bearbeitung der Werkzeugkopf mit einem eigenen Bearbeitungswerkzeug zum Einsatz gelangt, welches wahlweise über die innerhalb der hohlen Bohrstange geführte Antriebswelle angetrieben wird, so ist es nicht erforderlich, daß sich das Werkstück dreht. Das Werkstück kann vielmehr fest eingespannt werden.

Gemäß einem besonders zweckmäßigem weiteren Merkmal der Erfindung ist die Klemmvorrichtung so ausgebildet, daß sie auf einem numerisch steuerbaren Schlitten einer vorhandenen Drehmaschine mit einem Spindelkasten und einer Einspannvorrichtung für das Werkstück angeordnet werden kann. Dadurch ist es möglich, die bei der Drehmaschine an sich vorhandene numerische Steuerung auszunutzen, und ferner besteht die Möglichkeit, das zu bearbeitende Werkstück fest einzuspannen.

Andere vorteilhafte Ausgestaltungen und zweckmäßige Weiterbildungen der Erfindung sind in den Unteransprüchen angegeben.

Nachfolgend wird die Erfindung anhand des in der Zeichnung dargestellten Ausführungsbeispiels zum besseren Verständnis näher erläutert. Es zeigen:

Fig. 1 eine Seitenansicht eines auf Drehmaschine angeordneten neuen Werkzeuges,

Fig. 2 eine Teil-Querschnittsansicht einer hohl ausgebildeten Bohrstange des Werkzeuges mit einem vorn an der Bohrstange lösbar befestigtem Werkzeugkopf,

Fig. 3 eine um 90° gedrehte Seitenansicht des vorderen Endes der Bohrstange gemäß Fig. 2 mit dem daran befestigten Werkzeugkopf, und

Fig. 4 eine weitere Querschnittsansicht der hohlen Bohrstange.

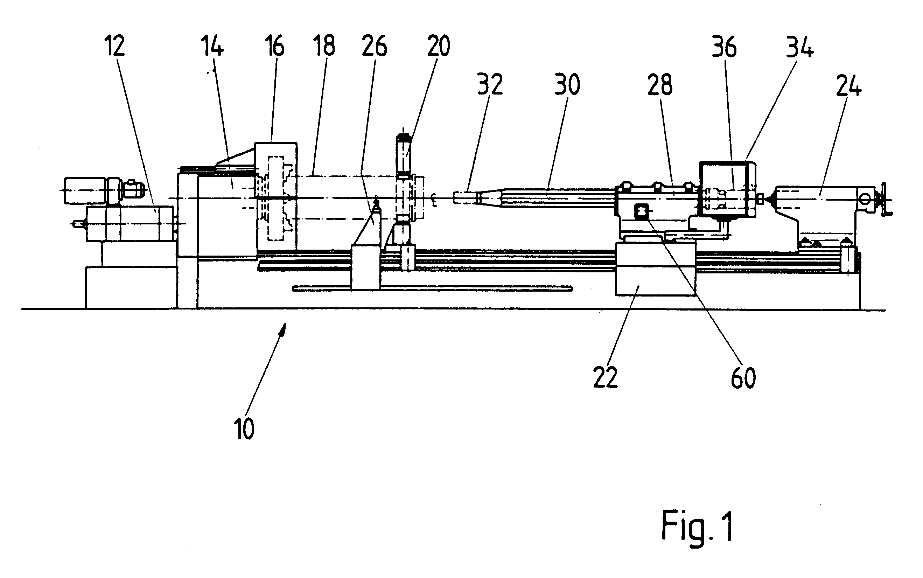

Die Darstellung in Fig. 1 zeigt eine an sich bekannte Drehmaschine 10 mit einem Hauptantrieb 12 und einem Spindelkasten 14, dem eine Einspannvorrichtung 16 zugeordnet ist. Auf dieser Drehmaschine 10 ist das neue Werkzeug befestigt, welches eine hohl ausgebildete numerisch steuerbare Bohrstange 30 umfaßt, an dessen vorderen Ende lösbar ein Werkzeugkopf 32 befestigt ist, und die in einer Klemmvorrichtung 28 geführt bzw. gehalten ist.

Die genannten Klemmvorrichtung 28 selbst ist auf einem numerisch steuerbaren Schlitten 22 der Drehmaschine 10 angeordnet, so daß die Klemmvorrichtung 28 - und damit die festgeklemmte Bohrstange 30 - numerisch gesteuert bewegbar sind.

Die Drehmaschine 10 umfaßt ferner einen Setzstock 20 sowie einen Meßschlitten 26 und einen Reitstock 24. Das für eine tiefliegende Innenbearbeitung vorgesehene hohle Werkstück 18 wird mit Hilfe der Einspannvorrichtung 16 auf der Drehmaschine 10 befestigt und eingespannt.

Ein weiterer Bestandteil der Drehmaschine 10 ist noch die Bedientafel 34 am NC-gesteuerten Schlitten 22.

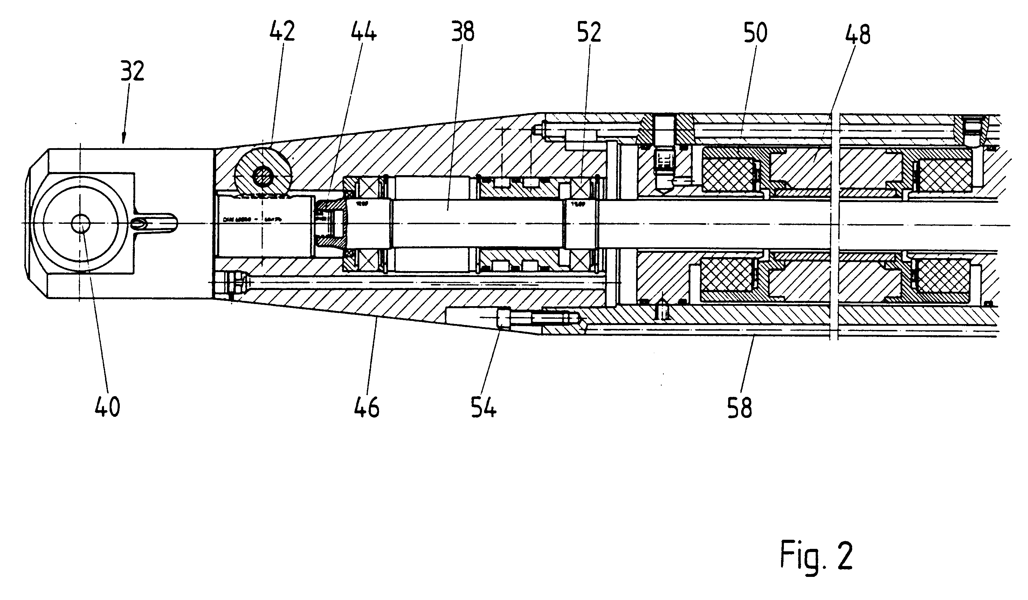

Ein angeflanschter Antriebsmotor 36 dient zum Antrieb einer in Fig. 2 dargestellten Antriebswelle 38, die sich innerhalb der hohlen Bohrstange 30 erstreckt.

Die Klemmvorrichtung 28 ist in an sich bekannter Weise aufgebaut und erfüllt den Zweck, die im Querschnitt mehreckig ausgebildete hohle Bohrstange 30 wahlweise gegen Verschieben und Drehen gesichert festzuklemmen bzw. zum Zwecke einer waagerechten Verschiebebewegung (Positionierung) freizugeben. Die erwähnte Verschiebebewegung erfolgt mittels einer Zahnstange 58, die von einem Motor 60 antreibbar ist. Im festgeklemmten Zustand kommt die Bohrstange 10 mit vier über den Umfang verteilte gehärtete Leisten in Kontakt (vgl. Fig. 4, wo auch Befestigungsschrauben 54 dargestellt sind).

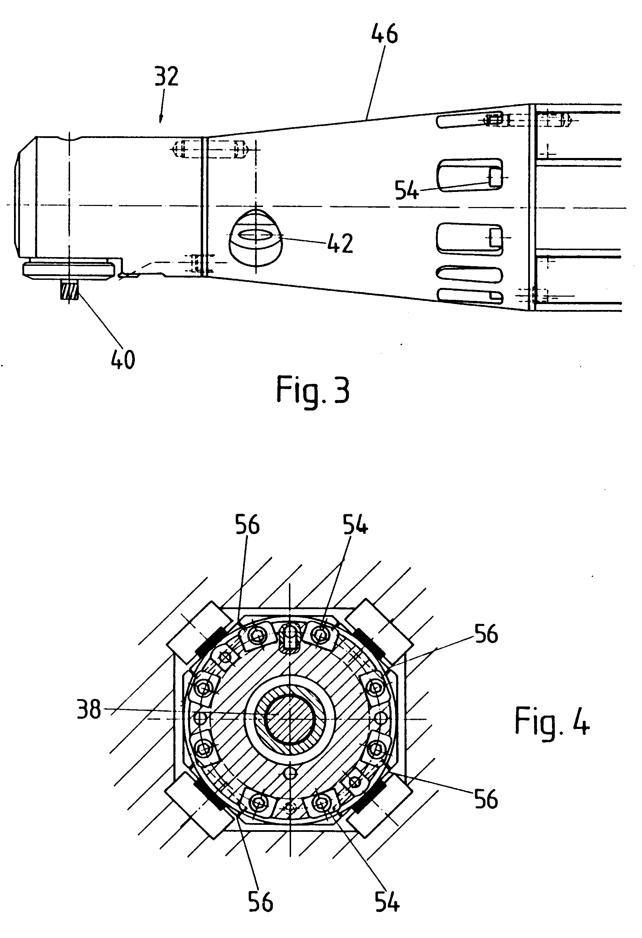

Am Bohrstangenkopf 46 der hohlen Bohrstange 30 ist gemäß den Darstellungen in Fig. 2 und 3 der Werkzeugkopf 32 lösbar befestigt. Diese lösbare Befestigung kann in an sich bekannter Weise mittels einer Klemmkupplung 42 erfolgen, und durch eine Antriebskupplung 44 ist gewährleistet, daß die innerhalb der hohlen Bohrstange 30 befindliche Antriebswelle 38 in eine Wirkverbindung mit dem Werkzeugkopf 32 gelangt, um beispielsweise ein Fräswerkzeug 40 antreiben zu können. Mit diesem Fräswerkzeug 40 läßt sich innerhalb des hohlen Werkstückes 18 eine Bearbeitung durchführen, die bei der bekannten rotatorischen Bearbeitung mit einem feststehenden Werkzeug und einem sich drehenden Werkstück nicht möglich wäre. Somit können mittels des Werkzeugkopfes 32 mit dem antreibbaren Fräswerkzeug 40 auch schwierige komplexe Konturen innerhalb des hohlen Werkstückes 18 in großer Tiefe erzeugt werden.

Da der Werkzeugkopf 32 lösbar am Bohrstangenkopf 46 angeordnet ist, besteht - je nach Anforderung - die Möglichkeit, unterschiedliche Werkzeugköpfe 32 mit gewünschten angetriebenen Werkzeugen zu verwenden.

Die hohl ausgebildete Bohrstange 30 kann eine relativ große Länge von beispielsweise 3 m besitzen, und um gleichwohl eine exakte Innenbearbeitung zu ermöglichen, besitzt die Bohrstange 30 Schwingungsdämpfer 48, die innerhalb eines Stahlgehäuses 50 angeordnet sind. Für eine sichere Funktionsweise der innerhalb der Bohrstange 30 geführten Antriebswelle 38 sind noch Stützlager 52 vorgesehen.

**Patentansprüche**

1. Werkzeug für die tiefliegende Innenbearbeitung hohler Werkstücke mit schwierigen Konturen, das eine hohl ausgebildete Bohrstange (30) umfaßt, die von einer Klemmvorrichtung (28) gehalten ist, wobei innerhalb der hohlen Bohrstange (30) eine Antriebswelle (38) angeordnet und am dem vorderen Ende der Bohrstange (30) ein Werkzeugkopf (32) mit mindestens einem Bearbeitungswerkzeug (40) vorgesehen ist, welches wahlweise über die Antriebswelle (38) antreibbar ist, dadurch gekennzeichnet, daß die Bohrstange (30) mit inneren Schwingungsdämpfern (48) versehen ist, daß die Klemmvorrichtung (28) die Bohrstange (30) wahlweise festklemmt oder zu einer Bewegung in Achsrichtung freigibt, daß die Bohrstange (30) numerisch gesteuert und im nicht festgeklemmten Zustand zu einer Positionierbewegung freigegeben ist, und daß die Klemmvorrichtung (28) numerisch steuerbar ist, so daß die festgeklemmte Bohrstange (30) zusammen mit der Klemmvorrichtung eine numerisch gesteuerte Vorschubbewegung durchführt.

2. Werkzeug nach Anspruch 1, dadurch gekennzeichnet, daß die Klemmvorrichtung (28) zur lösbaren Befestigung auf einem numerisch steuerbaren Schlitten (22) einer Drehmaschine (10) mit einem Spindelkasten (14) und einer Einspannvorrichtung (16) für ein Werkstück (18) ausgebildet ist.

3. Werkzeug nach einem der vorhergehenden Ansprüche 1 - 2, dadurch gekennzeichnet, daß an der Bohrstange (30) ein Antriebsmotor (36) für die Antriebswelle (38) ortsfest angeordnet ist.

4. Werkzeug nach einem der vorhergehenden Ansprüche 1 - 3, dadurch gekennzeichnet, daß der Werkzeugkopf (32) lösbar (42, 44) an der Bohrstange (30) befestigt ist.

5. Werkzeug nach Anspruch 4, dadurch gekennzeichnet, daß der Werkzeugkopf (32) einen Bohrkopf und einen Fräskopf besitzt, die wahlweise in eine Arbeitsposition bringbar und mit der Antriebswelle (38) kuppelbar (44) sind.

6. Werkzeug nach einem der vorhergehenden Ansprüche 1 - 5, dadurch gekennzeichnet, daß die Klemmvorrichtung (28) einen Verschiebeantrieb besitzt, durch welchen die Bohrstange (30) im nicht festgeklemmten Zustand längs ihrer Achse bewegbar und in programmierbare Lagen positionierbar ist.

7. Werkzeug nach einem der vorhergehenden Ansprüche 1 - 5, dadurch gekennzeichnet, daß die Klemmvorrichtung (28) einen Verschiebeantrieb besitzt, durch welchen die Bohrstange (30) im festgeklemmten Zustand einer Vorschubbewegung längs und/oder quer ihrer Achse unterworfen ist.

8. Werkzeug nach Anspruch 6 oder 7, dadurch gekennzeichnet, daß die Bohrstange auf ihrer unteren Seite eine Verzahnung in Form einer Zahnstange (58) besitzt, die in Eingriff mit dem Verschiebeantrieb steht.

9. Werkzeug nach einem der vorhergehenden Ansprüche 1 - 8, dadurch gekennzeichnet, daß die Bohrstange (30) im Querschnitt eine eckige Kontur besitzt und verdrehsicher innerhalb der Klemmvorrichtung (28) gehalten ist.

## Claims

1. Tool for machining deeply in the inside of hollow workpieces with difficult contours, which comprises a hollow drill rod (30) which is held by a clamping device (28), a drive shaft (38) being disposed inside the hollow drill rod (30) and a tool head (32) comprising at least one machining tool (40) being provided at the front end of the drill rod (30), which machining tool is optionally drivable by the drive shaft (38), characterized in that the drill rod (30) is provided with internal vibration dampers (48), that the clamping device (28) firmly clamps the drill rod (30) as desired or releases it for a movement in the axial direction, that the drill rod (30) is numerically controlled and, in the unclamped state, is released for a positioning movement, and that the clamping device (28) is numerically controllable, so that the firmly clamped drill rod (30), together with the clamping device, executes a numerically controlled feed movement.

2. Tool according to Claim 1, characterized in that the clamping device (28) is constructed to be releasably fixed on a numerically controllable sliding carriage (22) of a turning machine (10) comprising a headstock (14) and a chucking device (16) for a workpiece (18).

3. Tool according to one of the preceding Claims 1 to 2, characterized in that a drive motor (36) for the drive shaft (38) is mounted fixed on the drill rod (30).

4. Tool according to one of the preceding Claims 1 to 3, characterized in that the tool head (32) is releasably (42, 44) fixed to the drill rod (30).

5. Tool according to Claim 4, characterized in that the tool head (32) comprises a drilling head and a milling head, which can be brought as desired into a working position and can be coupled (44) to the drive shaft (38).

6. Tool according to one of the preceding Claims 1 to 5, characterized in that the clamping device (28) possesses a sliding drive, by which the drill rod (30), in the unclamped condition, can be moved along its axis and can be positioned in programmable positions.

7. Tool according to one of the preceding Claims 1 to 5, characterized in that the clamping device (28) possesses a sliding drive, by which the drill rod (30), in the clamped condition, can be subjected to a feed movement longitudinally and/or transversely to its axis.

8. Tool according to Claim 6 or 7, characterized in that the drill rod possesses, on its lower face, a set of teeth in the form of a toothed rack (58), which is in engagement with the sliding drive.

9. Tool according to one of the preceding Claims 1 to 8, characterized in that the drill rod (30) has a polygonal contour in cross-section and is held secured against rotation inside the clamping device (28).

**Revendications**

1. Outil pour l'usinage intérieur profond de pièces à usiner creuses avec contours difficiles, qui comprend une barre d'alésage (30) de forme creuse qui est tenue par un dispositif de serrage (28), dans la barre d'alésage creuse (30) étant logé un arbre moteur (38) et, au bout avant de la barre d'alésage (30), étant prévue une tête d'outil (32) avec au moins un outil d'usinage (40) qui peut éventuellement être commandé par l'arbre moteur (38), caractérisé en ce que la barre d'alésage (30) est munie d'amortisseurs de vibration internes (48), que le dispositif de serrage (28) éventuellement bloque la barre d'alésage (30) ou la libère pour un déplacement dans le sens axial, que la barre d'alésage (30) est commandée numériquement et libérée à l'état non calée pour un mouvement de positionnement, et que le dispositif de serrage (28) peut être commandé numériquement, de manière que la barre d'alésage (30), avec le dispositif de serrage, effectue un mouvement d'avance commandé numériquement.

2. Outil suivant la revendication 1, caractérisé en ce que le dispositif de serrage (28) est prévu pour la fixation amovible sur un chariot (22) commandable numériquement d'un tour (10) avec une poupée fixe (14) et un appareil de fixation (16) pour une pièce à usiner (18).

3. Outil suivant une des revendications précédentes 1 et 2, caractérisé en ce que, sur la barre d'alésage (30), est monté un moteur d'entraînement (36) fixe pour l'arbre moteur (38).

4. Outil suivant une des revendications précédentes 1 à 3, caractérisé en ce que la tête d'outil (32) est fixée amovible (42, 44) sur la barre d'alésage (30).

5. Outil suivant la revendication 4, caractérisé en ce que la tête d'outil (32) comporte une tête d'alésage et une tête portefraise qui, au choix, peuvent être amenées en position de travail et accouplées (44) à l'arbre moteur (38).

6. Outil suivant l'une des revendications précédentes 1 à 5, caractérisé en ce que le dispositif de serrage (28) comporte une commande de décalage par laquelle la barre d'alésage (30) peut être déplacée en état non bloqué le long de son axe et positionnée en positions programmables.

7. Outil suivant l'une des revendications précédentes 1 à 5, caractérisé en ce que le dispositif de serrage (28) comporte une commande de décalage par laquelle la barre d'alésage (30) est soumise, en état bloqué, à un mouvement d'avance le long de son axe et/ou perpendiculaire à celui-ci.

8. Outil suivant la revendication 6 ou 7, caractérisé en ce que la barre d'alésage comporte, sur son côté inférieur, une denture sous la forme d'une crémaillère (58) qui est en prise avec la commande de décalage.

9. Outil suivant l'une des revendications précédentes 1 à 8, caractérisé en ce qu'en coupe transversale, la barre d'alésage (30) présente un contour anguleux et est tenue à l'intérieur du dispositif de serrage (28) à l'abri de torsions.

Fig.1

EP 0 301 226 B1

Fig. 2

Fig. 3

Fig. 4